# EUROPEAN PATENT SPECIFICATION

(11) **EP 3 545 226 B1**
(45) Date of publication and mention of the grant of the patent: **08.03.2023**
(21) Application number: 17874991.7
(22) Date of filing: 19.10.2017
(51) Int. Cl.: F17C 13/12, A62C 4/00, B60K 15/035

(54) **A TANK ARRANGEMENT AND A VEHICLE**
TANKANORDNUNG UND FAHRZEUG
AGENCEMENT DE RÉSERVOIR ET VÉHICULE

(30) Priority: 23.11.2016 SE 1651528
(43) Date of publication of application: 02.10.2019
(73) Proprietor: Scania CV AB, 151 87 Södertälje (SE)
(72) Inventor: PASIC, Anel, 151 48 Södertälje (SE); BÖRJES, Markus, 125 44 Älvsjö (SE)
(74) Representative: Scania CV AB
(86) International application number: PCT/SE2017/051030
(87) International publication number: WO 2018/097779

(56) References cited:
- EP-A1- 0 530 945
- EP-A1- 0 530 945
- EP-A1- 2 416 055
- WO-A1-2009/029023
- WO-A1-2009/084706
- WO-A1-2010/136692
- WO-A1-2016/126958
- WO-A2-2012/143740
- FR-A1- 2 951 243
- JP-A- 2001 010 355
- JP-A- 2007 106 262
- JP-A- 2014 232 654
- US-A- 5 191 990
- US-A1- 2010 276 024
- US-A1- 2011 127 263
- US-A1- 2011 155 398

## Description

### TECHNICAL FIELD

The present invention relates to a tank arrangement according to claim 1 and a vehicle comprising such a tank arrangement.

### BACKGROUND

Receptacles carrying flammable pressurized gas (pressure vessels) for safety reasons typically comprise some sort of pressure release device, arranged to release the gas in case of emergency. For example, in the case of fire, the pressure of the gas inside the receptacle will increase as the temperature of the gas increases. By releasing the pressurized gas the pressure inside the receptacle decreases and the risk that the receptacle will burst is thereby reduced. It is commonly known to use pressure release devices adapted to open and release the gas depending on temperature or pressure, such as thermal fuses or pressure release valves. However, if the pressurized gas is released in direction of the fire the gas may ignite and cause large flames, depending on the pressure of the gas. Such flames caused by the released gas may endanger the safety of the surroundings.

The problem with large flames caused by releasing pressurized gas is addressed in document WO2012143740 A2. The document discloses a pressure release device having a variable aperture, wherein the aperture, and thereby the mass flow rate, is small in the beginning of the release and increases when the pressure decreases. Document US2012073680 A1 discloses a safety device for pressurized gas comprising a body defining a channel for releasing the gas, wherein fins may be arranged to cause the gas to rotate and thereby mix the gas with air. This way, flames caused by the released gas may be shortened.

JP 2007106262 A discloses a discharge pipe for releasing pressurized gas from a gaseous fuel tank. The discharge pipe comprises a plurality of slits and a rotatable cover member capable of directing the release of the pressurized gas from the discharge pipe.

### SUMMARY OF THE INVENTION

Despite known solutions in the field, there is still a need to develop an alternative safety device for receptacles carrying pressurized gas.

An object of the present invention is therefore to achieve an advantageous safety device for receptacles carrying pressurized gas, which increases the safety in dangerous situations.

The herein mentioned object is achieved by a tank arrangement according to claim 1 and a vehicle comprising such a tank arrangement.

Hence, according to the present invention a tank arrangement comprising at least one receptacle for carrying pressurized gas is provided. The tank arrangement comprises a safety device and a receptacle for carrying pressurized gas. The safety device comprises a conduit extending between a first end and a second end, the first end comprising an inlet opening. The conduit is arranged with the inlet opening in fluid communication with the inside of the receptacle via a pressure release device. The conduit comprises a plurality of outlet openings in the conduit wall, adapted to release the pressurized gas to the ambient air. The tank arrangement may be adapted for carrying compressed natural gas (CNG) fuel. The at least one receptacle may thus be a fuel tank carrying CNG. The tank arrangement may comprise a plurality of receptacles.

The safety device is adapted to be arranged in association with a receptacle carrying flammable pressurized gas. In dangerous situations, such as for example fire, the pressurized gas should be released from the receptacle to reduce the risk of the receptacle bursting. Receptacles carrying pressurized gas therefore typically comprise at least one pressure release device for releasing the gas in dangerous situations. The safety device according to the invention is arranged with the inlet opening in fluid communication with the receptacle via a pressure release device. Such a pressure release device may be configured to open based on temperature or pressure and thereby release the pressurized gas. Thus, when the temperature or the pressure exceeds a certain value the pressure release device may open and the pressurized gas inside the receptacle can enter the conduit via the inlet opening and be released to the ambient air through the outlet openings. The outlet openings are suitably always open to the ambient air. The pressure in the receptacle may be very high and with the pressure release device open this may result in a high mass flow rate through the conduit. If the conduit would have comprised only one outlet opening, the mass flow rate at the outlet opening would be the same as the mass flow rate at the inlet opening. With a high pressure in the receptacle the outflow through the outlet opening would thereby have a very high speed, which could cause large flames if the released gas is ignited. By providing the conduit with a plurality of outlet openings, i.e more than two, in the conduit wall according to the invention, the mass flow rate will be divided between the different outlet openings. The mass flow rate at each outlet opening is thus decreased and the gas released from each outlet opening would thereby cause smaller sized flames if the gas is ignited. A safety device is thereby achieved, which reduces the size of the flames that might arise if the released gas is ignited. The safety of objects/persons in the surroundings is thereby increased.

The conduit of the safety device may comprise a first portion and a second portion. The first portion may comprise the first end and the second portion may comprise the second end. The first portion and the second portion may extend essentially perpendicularly to each other. The second portion may comprise a straight tube extending longitudinally between the first portion and the second end. The outlet openings may be arranged only on the second portion. The cross-section area of the conduit may be constant. That is, the cross-section area of the first portion and the second portion are suitably essentially the same. The second end of the conduit may be closed by means of a plug/stopper or similar.

According to the invention the inlet opening area is smaller than the combined area of all outlet openings. Thus, the inlet opening area is smaller than the sum of the areas of all outlet openings. By having a larger area for releasing the gas than the inlet opening area, the pressure of the gas in the part of the conduit comprising the outlet openings will be decreased compared to the pressure of the gas leaving the receptacle. The pressure of the outflow at each outlet opening will be reduced and the size of the flames, possibly caused by the released gas, will thereby be reduced.

According to an embodiment of the invention the outlet openings are unevenly distributed along a longitudinal extension of the conduit. The outlet openings may be unevenly distributed along the longitudinal extension of the second portion of the conduit. Depending on how the outlet openings are arranged along the conduit, the pressure of the gas in the conduit will be different and the mass flow rate at the different outlet openings may differ accordingly. The pressure of the gas is higher closer to the first end of the conduit than at the second end, due to the outlet openings arranged along the conduit. The mass flow rate at an outlet opening arranged closer to the first end of the conduit may thereby be higher than the mass flow rate at a different outlet opening of the same size arranged closer to the second end. By distributing the outlet openings unevenly along the longitudinal extension of the conduit the mass flow rates at the different outlet openings along the conduit can be controlled. The outlet openings are suitably arranged along the longitudinal extension of the conduit, such that an essentially even mass flow rate is achieved. That is, the outlet openings are suitably arranged along the longitudinal extension of the conduit, such that the mass flow rate is essentially the same at the different outlet openings.

According to an embodiment of the invention the conduit comprises a greater number of outlet openings closer to the second end than the first end of the conduit. The number of outlet openings may thus increase closer to the second end of the conduit. The distance between the individual outlet openings, seen in the longitudinal direction of the conduit, may be shorter closer to the second end than the first end of the conduit. It may thus be closer between the outlet openings at the second end. When the pressure release device is opened and the gas is released from the receptacle, the pressure at the first end of the conduit will be essentially similar to the original pressure in the receptacle. If the conduit would have comprised more outlet openings closer to the first end than the second end most of the gas would have been released at the first end and the mass flow rate through these outlet openings would have been relatively high. By increasing the number of outlet openings at the second end, less resistance results in an increased gas flow towards the second end and less gas is released through the outlet openings closer to the first end. A more even mass flow rate through the outlet openings along the conduit is thereby achieved.

According to an embodiment of the invention the outlet opening areas are larger closer to the second end than the first end of the conduit. An outlet opening arranged close to the first end may thus have a smaller opening area than an outlet opening arranged closer to the second end. The outlet opening areas may thus increase closer to the second end. The outlet opening area may be referred to as the size or cross-section area of the outlet opening. The size of the outlet openings may thus increase closer to the second end. As previously described the pressure of the gas close to the first end is higher than at the second end. By increasing the outlet opening areas closer to the second end the resistance for the gas is reduced and even though the pressure is lower at the second end the mass flow rate will be similar to the mass flow rate at the smaller outlet openings closer to the first end. A more even mass flow rate through the outlet openings along the conduit is thereby achieved.

According to an embodiment of the invention the outlet openings are arranged to release and direct the pressurized gas in a direction where it would do the least harm. Suitably, the outlet openings are arranged to release and direct the pressurized gas in a direction where any arising flames would do the least harm. The outlet openings may be arranged to direct the pressurized gas away from flammable materials. Depending on how the receptacle is arranged and how the safety device is attached to the receptacle the outlet openings may be arranged such that they direct the released gas in a safe direction. In one example, the receptacle associated with the safety device is a fuel tank for CNG fuel and the receptacle may be attached to a vehicle. If the vehicle is a truck the receptacle may be arranged at a supporting structure (frame) of the vehicle and if the vehicle is a buss the receptacle may be arranged at the roof of the vehicle. If the vehicle is a truck the outlet openings may be arranged such that they direct the released gas downwards inwards underneath the vehicle. That is, the outlet openings may be arranged to direct the released gas obliquely downwards, towards the ground under the centre of the vehicle. By directing the released gas this way, any flames that may arise are restricted underneath the vehicle. The risk that the flames will negatively affect objects or persons in the surroundings is thereby reduced. If the vehicle is a bus the outlet openings may be arranged to direct the released gas upwards, away from the vehicle. The risk that the flames will negatively affect objects or persons in the surroundings is thereby reduced. In one example, the receptacle is a stationary receptacle and the outlet openings are arranged to direct the released gas downwards or obliquely downwards, towards the ground on which the receptacle is positioned. Alternatively or additionally the conduit is configured to direct the pressurized gas away from flammable materials. The conduit may be configured to direct the released gas in a safe direction. The conduit may be configured to direct and release the released pressurized gas in a direction where any arising flames would do the least harm.

According to an aspect, not covered by the appended claims, a safety device for a receptacle carrying pressurized gas is provided. The safety device comprises a conduit extending between a first end and a second end, the first end comprising an inlet opening and the second end comprising an outlet opening adapted to release the pressurized gas to the ambient air. The conduit is adapted to be arranged with the inlet opening in fluid communication with the inside of the receptacle. The conduit is adapted to be arranged, such that the pressurized gas is released in a direction where it would do the least harm. The conduit is suitably adapted to be arranged, such that the pressurized gas is released obliquely downwards.

According to the invention a tank arrangement for a vehicle is provided. The pressure release device may be configured to open based on temperature or gas pressure and thereby ensure that the the pressurized gas can be released via the outlet openings. Thus, when the temperature or the pressure exceeds a certain value the pressure release device may open and the pressurized gas inside the receptacle can enter the conduit via the inlet opening and be released to the ambient air through the outlet openings. The outlet openings are suitably always open to the ambient air. The tank arrangement may be adapted to be arranged on a supporting structure of the vehicle, wherein the safety device may be adapted to be arranged, such that the outlet openings of the safety device release the pressurized gas obliquely downwards underneath the vehicle. Alternatively, the tank arrangement may be adapted to be arranged on the roof of the vehicle and the safety device may be adapted to be arranged, such that the outlet openings release the pressurized gas upwards, away from the vehicle.

According to an aspect of the invention a vehicle comprising a tank arrangement according to the herein mentioned embodiment is provided. Suitably the receptacle is arranged on a supporting structure of the vehicle and wherein the outlet openings of the safety device are arranged, such that the pressurized gas is released obliquely downwards underneath the vehicle. Alternatively, the receptacle may be arranged on the roof of the vehicle and the outlet openings of the safety device may be arranged, such that the pressurized gas is released upwards, away from the vehicle.

Further objects, advantages and novel features of the present invention will become apparent to one skilled in the art from the following details, and also by putting the invention into practice. Whereas embodiments of the invention are described below, it should be noted that it is not restricted to the specific details described. Specialists having access to the teachings herein will recognise further applications, modifications and incorporations within other fields, which are within the scope of the claims.

### BRIEF DESCRIPTION OF THE DRAWINGS

For fuller understanding of the present invention and further objects and advantages of it, the detailed description set out below should be read together with the accompanying drawings, in which the same reference notations denote similar items in the various drawings, and in which:
- Figure 1: schematically illustrates a vehicle according to an embodiment of the invention;
- Figure 2: schematically illustrates a tank arrangement according to an embodiment of the invention;
- Figure 3a: schematically illustrates a safety device according to an example; and
- Figure 3b: schematically illustrates a safety device according to an example.

### DETAILED DESCRIPTION OF THE DRAWINGS

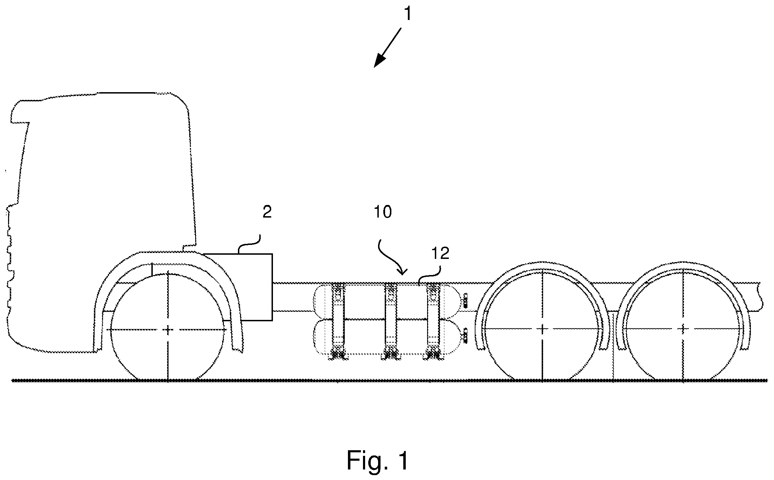

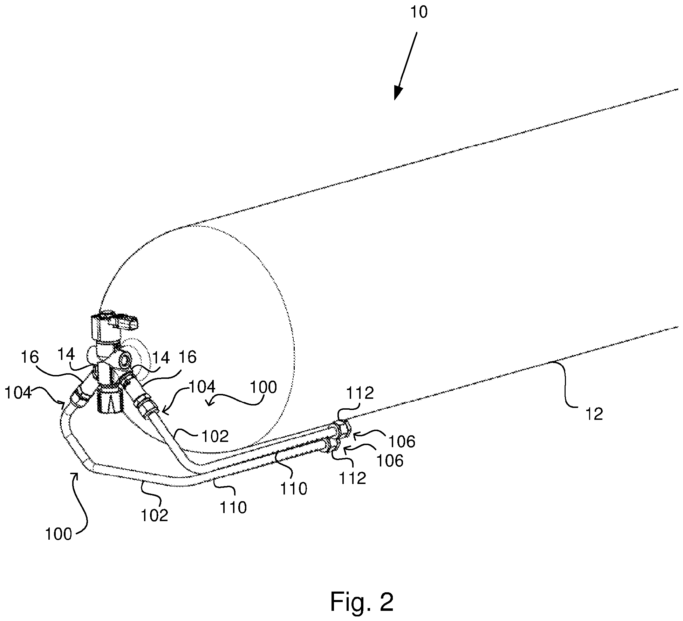

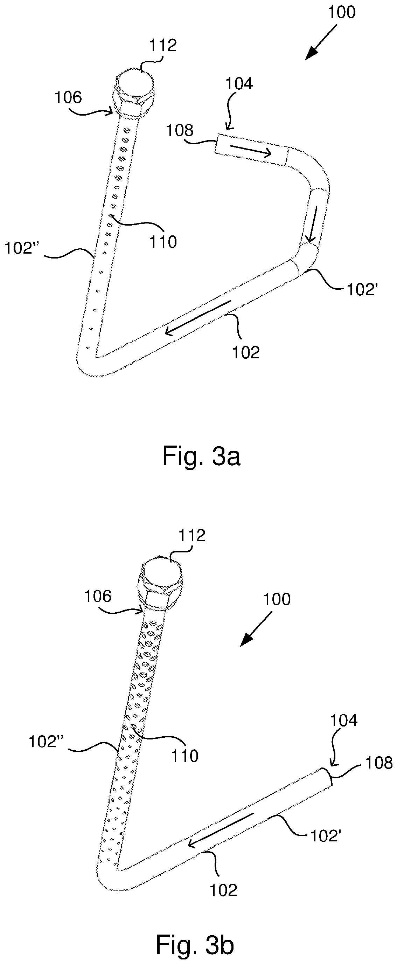

Figure 1 schematically shows a side view of a vehicle 1 comprising a propulsion unit 2. The propulsion unit 2 may be a gas engine, for example an Otto engine. The propulsion unit 2 is suitably driven on CNG fuel (compressed natural gas). The CNG is flammable. The vehicle 1 suitably comprises a tank arrangement 10 with at least one receptacle (tank) 12 carrying the CNG. The tank arrangement 10 may comprise a plurality of receptacles 12 carrying the pressurized gas. A safety device for releasing the pressurized gas to the ambient air in case of emergency is suitably arranged in association with each receptacle 12. The tank arrangement 10 is further described in Figure 2 and the safety device is further described in Figure 3a-3b. The vehicle 1 may be a heavy vehicle, e.g. a truck or a bus. The vehicle 1 may alternatively be a passenger car. The vehicle 1 may be manually operated, remotely operated or autonomously operated. In this figure the vehicle 1 is illustrated as a truck and the tank arrangement 10 is arranged at a frame of the vehicle 1. Only two receptacles 12 are shown but the tank arrangement 10 may comprise for example eight receptacles 12. In the case where the vehicle 1 is a bus, the tank arrangement 10 may be arranged at the roof of the vehicle 1.

Figure 2 schematically illustrates a tank arrangement 10 according to an embodiment of the invention. The tank arrangement 10 comprises at least one receptacle 12 carrying pressurized gas. The pressurized gas may be CNG or any other pressurized flammable gas. The tank arrangement 10 may be arranged on a vehicle as disclosed in Figure 1. Alternatively the tank arrangement 10 may be a stationary tank arrangement 10. The tank arrangement 10 further comprises at least one pressure release device 14 arranged to release pressurized gas from the receptacle 12 in dangerous situations. The pressure release device 14 may constitute a part of the receptacle 12. The pressure release device 14 may be adapted to open when the pressure or the temperature acting on the pressure release device 14 exceeds a certain value. When the pressure release device 14 is open the pressurized gas inside the receptacle 12 is exhausted to the ambient air.

Figure 2 shows two pressure release devices 14 where one may be adapted to open when the pressure exceeds a certain value and the other may be adapted to open when the temperature exceeds a certain value. This way, the risk is reduced that the receptacle 12 will burst due to too high pressure or temperature.

A safety device 100 may be arranged in association with each pressure release device 14. Each safety device 100 may comprise a conduit 102 extending between a first end 104 and a second end 106, the first end 104 comprising an inlet opening 108. The conduit 102 is suitably arranged with the inlet opening 108 in fluid communication with the inside of the receptacle 12 via the pressure release device 14. The second end 106 of the conduit 102 may be closed and the conduit 102 may comprise a plurality of outlet openings 110 in the conduit wall, adapted to release the pressurized gas to the ambient air. The second end 106 of the conduit 102 may be closed by a plug/stopper 112. Thus, when a pressure release device 14 is open the pressurized gas in the receptacle 12 will enter the inlet opening 108, flow through the conduit 102 of the safety device 100 and be release to the ambient air through the outlet openings 110. By closing the second end 106 of the conduit 102 and providing the conduit 102 with a plurality of outlet openings 110 in the conduit wall, the gas mass flow rate is divided between the different outlet openings 110 and the size of any flames that might arise if the released gas is ignited, is thereby reduced.

In this embodiment the tank arrangement 10 also comprises at least one exhaust conduit 16 connected to the at least one pressure release device 14. The exhaust conduit 16 is directed obliquely downwards and the conduit 102 of the safety device 100 may be attached to the exhaust conduit 16. The conduit 102 of the safety device 100 may alternatively be directly attached to the pressure release device 14.

It is to be understood that even though Figure 2 only shows one receptacle 12, the tank arrangement 10 may comprise a plurality of receptacles 12, each comprising at least one safety device 100.

Figure 3a schematically illustrates a safety device 100 for a receptacle 12 carrying pressurized gas. The safety device 100 may be part of a tank arrangement 10 as disclosed in Figure 2 and the safety device 100 may thus be adapted for a fuel tank comprising CNG fuel. The safety device 100 may be adapted for any pressure vessel carrying pressurized flammable gas. The safety device 100 may comprise a conduit 102 extending between a first end 104 and a second end 106, the first end 104 comprising an inlet opening 108, wherein the conduit 102 is adapted to be arranged with the inlet opening 108 in fluid communication with the inside of the receptacle 12. The second end 106 of the conduit 102 may be closed and the conduit 102 may comprise a plurality of outlet openings 110 in the conduit wall, adapted to release the pressurized gas to the ambient air. Thus, the safety device 100 may be adapted to be arranged such that pressurized gas may enter the conduit via the inlet opening 108, flow through the conduit 102 and be released to the ambient air via the outlet openings 110. The flow direction in the conduit 102 is illustrated by arrows in the figure. The second end 106 of the conduit 102 may be closed by a plug/stopper 112.

The conduit 102 of the safety device 100 may comprise a first portion 102' and a second portion 102". The first portion 102' may comprise the first end 104 and the second portion 102" may comprise the second end 106. The first portion 102' and the second portion 102" may extend essentially perpendicularly to each other. The outlet openings 110 may be arranged only on the second portion 102". In this embodiment the first portion 102' may comprise a plurality of bent sections whereas the second portion 102" may comprise a straight section.

The inlet opening area is suitably smaller than the combined area of all outlet openings 110. By having a larger area for releasing the gas than the inlet opening area, the pressure in the second portion 102" of the conduit 102, where the outlet openings 110 are arranged, will be lower than the pressure of the gas entering the conduit 102. The size of any flames caused by the released gas will thereby be reduced.

In this example the outlet openings 110 are unevenly distributed along a longitudinal extension of the second portion 102" of the conduit 102. The outlet openings 110 are suitably distributed, such that an essentially even mass flow rate out from the different outlet openings 110 is achieved. The second portion 102" of the conduit may comprise a greater number of outlet openings 110 closer to the second end 106 than the first end 104 of the conduit 102. The distance between the individual outlet openings 110, seen in the longitudinal direction of the second portion 102" of the conduit 102, may be smaller closer to the second end 106 than the first end 104 of the conduit 102. By increasing the number of outlet openings 110 at the second end 106 compared to the first end 104, less resistance will increase the gas flow towards the second end 106. A more even mass flow rate through the outlet openings 110 along the conduit 102 is thereby achieved.

The outlet opening areas may also be larger closer to the second end 106 than the first end 104 of the conduit 102. An outlet opening 110 arranged close to the first end 104 may thus have a smaller opening area than an outlet opening 110 arranged closer to the second end 106. The outlet opening areas may thus increase closer to the second end 106.

The outlet openings 110 may be arranged to direct and release the pressurized gas in a direction where any arising flames would do the least harm. In this embodiment the outlet openings 110 are arranged along a straight line on one side of the second portion 102" of the conduit 102. The safety device 100 may however comprise outlet openings 110 arranged along at least part of the circumference of the conduit 102. The outlet openings 110 may be arranged to direct the pressurized gas away from flammable materials.

Figure 3b schematically illustrates a safety device 100 for a receptacle 12 carrying pressurized gas. The safety device 100 is suitably configured as the safety device 100 as disclosed in Figure 3a with the differences that the conduit 102 comprises outlet openings 110 directed in different directions. The outlet openings 110 may be arranged at least partially around the circumference of the conduit. The released gas will thus be directed in different directions depending on which outlet opening 110 the gas is released from. This way, the risk for large flames is reduced. Also, in this example the first portion 102' of the conduit 102 may comprise a straight section extending essentially perpendicularly to the second portion 102" of the conduit 102.

The foregoing description of the preferred embodiments of the present invention is provided for illustrative and descriptive purposes. It is not intended to be exhaustive or to restrict the invention to the variants described. Many modifications and variations will obviously be apparent to one skilled in the art, without departing from the scope of the appended claims.

For example the first portion and the second portion of the conduit may be configured in different ways depending on the tank arrangement in which the safety device is arranged. Also, the sizes and positions of the outlet openings may vary. The embodiments have been chosen and described in order best to explain the principles of the invention and its practical applications and hence make it possible for specialists to understand the invention for various embodiments.

## Claims

1. A tank arrangement (10), comprising at least one receptacle (12) for flammable pressurized gas, the tank arrangement comprising a safety device (100) for the receptacle (12) carrying flammable pressurized gas, the safety device (100) comprising a conduit (102) extending between a first end (104) and a second end (106), the first end (104) comprising an inlet opening (108), wherein the conduit (102) is arranged with the inlet opening (108) in fluid communication with the inside of the receptacle (12) via a pressure release device (14), wherein the conduit (102) comprises a plurality of outlet openings (110) in the conduit wall, adapted to release the pressurized gas to the ambient air, **characterized in that** the inlet opening area is smaller than the combined area of all outlet openings (110).

2. The tank arrangement (10) according to claim 1, wherein the outlet openings (110) are unevenly distributed over a longitudinal extension of the conduit (102).

3. The tank arrangement (10) according to any of the preceding claims, wherein the second end (106) of the conduit (102) is closed.

4. The tank arrangement (10) according to any of the preceding claims, wherein the conduit (102) comprises a greater number of outlet openings (110) closer to the second end (106) than the first end (104) of the conduit (102).

5. The tank arrangement (10) according to any of the preceding claims, wherein the outlet opening areas are larger closer to the second end (106) than the first end (104) of the conduit (102).

6. A vehicle (1), **characterized in that** it comprises a tank arrangement (10) according to any of the preceding claims.

7. A vehicle (1) according to claim 6, wherein the receptacle (12) is arranged on a supporting structure of the vehicle (1) and wherein the outlet openings (110) of the safety device (100) are arranged, such that the pressurized gas is released obliquely downwards underneath the vehicle (1).

8. A vehicle (1) according to claim 6, wherein the receptacle (12) is arranged on the roof of the vehicle (1) and wherein the outlet openings (110) of the safety device (100) are arranged, such that the pressurized gas is released upwards, away from the vehicle (1).

## Patentansprüche

1. Tankanordnung (10), die wenigstens einen Behälter (12) für entflammbares Druckgas umfasst, wobei die Tankanordnung eine Sicherheitsvorrichtung (100) für den entflammbares Druckgas fassenden Behälter (12) umfasst, wobei die Sicherheitsvorrichtung (100) eine Leitung (102) umfasst, die sich zwischen einem ersten Ende (104) und einem zweiten Ende (106) erstreckt, wobei das erste Ende (104) eine Einlassöffnung (108) umfasst, wobei die Leitung (102) mit der Einlassöffnung (108) in Fluidverbindung mit dem Inneren des Behälters (12) über eine Druckentlastungsvorrichtung (14) angeordnet ist, wobei die Leitung (102) eine Mehrzahl von Auslassöffnungen (110) in der Leitungswand umfasst, die dazu eingerichtet sind, das Druckgas an die Umgebungsluft abzugeben, **dadurch gekennzeichnet, dass** die Einlassöffnungsfläche kleiner ist als die kombinierte Fläche aller Auslassöffnungen (110).

2. Tankanordnung (10) nach Anspruch 1, wobei die Auslassöffnungen (110) ungleichmäßig über eine Längserstreckung der Leitung (102) verteilt sind.

3. Tankanordnung (10) nach einem der vorangehenden Ansprüche, wobei das zweite Ende (106) der Leitung (102) verschlossen ist.

4. Tankanordnung (10) nach einem der vorangehenden Ansprüche, wobei die Leitung (102) eine höhere Anzahl von Auslassöffnungen (110) näher an dem zweiten Ende (106) aufweist als an dem ersten Ende (104) der Leitung (102).

5. Tankanordnung (10) nach einem der vorangehenden Ansprüche, wobei die Auslassöffnungsflächen näher an dem zweiten Ende (106) größer sind als an dem ersten Ende (104) der Leitung (102).

6. Fahrzeug (1), **dadurch gekennzeichnet, dass** es eine Tankanordnung (10) nach einem der vorangehenden Ansprüche umfasst.

7. Fahrzeug (1) nach Anspruch 6, wobei der Behälter (12) an einer tragenden Struktur des Fahrzeugs (1) angeordnet ist und wobei die Auslassöffnungen (110) der Sicherheitsvorrichtung (100) derart angeordnet sind, dass das Druckgas schräg nach unten unter das Fahrzeug (1) abgegeben wird.

8. Fahrzeug (1) nach Anspruch 6, wobei der Behälter (12) am Dach des Fahrzeugs (1) angeordnet ist und wobei die Auslassöffnungen (110) der Sicherheitsvorrichtung (100) derart angeordnet sind, dass das Druckgas nach oben vom Fahrzeug (1) weg abgegeben wird.

## Revendications

1. Agencement de réservoir (10), comprenant au moins un réceptacle (12) pour du gaz sous pression inflammable, l'agencement de réservoir comprenant un dispositif de sécurité (100) pour le réceptacle (12) transportant du gaz sous pression inflammable, le dispositif de sécurité (100) comprenant un conduit (102) s'étendant entre une première extrémité (104) et une seconde extrémité (106), la première extrémité (104) comprenant une ouverture d'entrée (108), dans lequel le conduit (102) est agencé avec l'ouverture d'entrée (108) en communication fluidique avec l'intérieur du réceptacle (12) par l'intermédiaire d'un dispositif de libération de pression (14), dans lequel le conduit (102) comprend une pluralité d'ouvertures de sortie (110) dans la paroi de conduit, adapté à la libération du gaz sous pression dans l'air ambiant, **caractérisé en ce que** la surface d'ouverture d'entrée est plus petite que la surface combinée de toutes les ouvertures de sortie (110).

2. Agencement de réservoir (10) selon la revendication 1, dans lequel les ouvertures de sortie (110) sont réparties de manière irrégulière sur une extension longitudinale du conduit (102).

3. Agencement de réservoir (10) selon l'une quelconque des revendications précédentes, dans lequel la seconde extrémité (106) du conduit (102) est fermée.

4. Agencement de réservoir (10) selon l'une quelconque des revendications précédentes, dans lequel le conduit (102) comprend un plus grand nombre d'ouvertures de sortie (110) plus proches de la seconde extrémité (106) que de la première extrémité (104) du conduit (102).

5. Agencement de réservoir (10) selon l'une quelconque des revendications précédentes, dans lequel les surfaces d'ouverture de sortie sont plus grandes plus proches de la seconde extrémité (106) que de la première extrémité (104) du conduit (102).

6. Véhicule (1), **caractérisé en ce qu'**il comprend un agencement de réservoir (10) selon l'une quelconque des revendications précédentes.

7. Véhicule (1) selon la revendication 6, dans lequel le réceptacle (12) est agencé sur une structure de support du véhicule (1) et dans lequel les ouvertures de sortie (110) du dispositif de sécurité (100) sont agencées de telle sorte que le gaz sous pression est libéré de manière oblique et vers le bas sous le véhicule (1).

8. Véhicule (1) selon la revendication 6, dans lequel le réceptacle (12) est agencé sur le toit du véhicule (1) et dans lequel les ouvertures de sortie (110) du dispositif de sécurité (100) sont agencées, de telle sorte que le gaz sous pression est libéré vers le haut, à l'écart du véhicule (1).
